# EUROPÄISCHE PATENTSCHRIFT

(11) **EP 3 027 455 B1**
(45) Veröffentlichungstag und Bekanntmachung des Hinweises auf die Patenterteilung: **14.03.2018**
(21) Anmeldenummer: 14739689.9
(22) Anmeldetag: 16.07.2014
(51) Int. Cl.: B60K 17/346, F16H 48/11, B60K 17/16, B60K 17/35, F16H 48/22

(54) **ANTRIEBSSTRANG EINES KRAFTFAHRZEUGS**
DRIVE TRAIN OF A MOTOR VEHICLE
CHAÎNE CINÉMATIQUE D'UN VÉHICULE AUTOMOBILE

(30) Priorität: 02.08.2013 DE 102013012947
(43) Veröffentlichungstag der Anmeldung: 08.06.2016
(73) Patentinhaber: Audi AG, 85045 Ingolstadt (DE)
(72) Erfinder: MEIXNER, Christian, 85049 Ingolstadt (DE)
(74) Vertreter: Lehle, Josef
(86) Internationale Anmeldenummer: PCT/EP2014/001943
(87) Internationale Veröffentlichungsnummer: WO 2015/014449

(56) Entgegenhaltungen:
- EP-A2- 2 368 742
- WO-A1-91/06787
- DE-A1-102012 021 513
- JP-A- S6 397 432
- RU-C1- 2 077 453
- SE-C1- 126 044
- US-A1- 2010 218 632
- US-B1- 6 523 633

## Beschreibung

Die Erfindung betrifft einen Antriebsstrang eines Kraftfahrzeugs mit den Merkmalen des Oberbegriffs des Anspruchs 1. Die nach dem vorliegenden Prioritätsdatum veröffentlichte Druckschrift DE 10 2012 021 513 A1 ist bekannt. Um den durch ein Achsdifferential an der zweiten Radachse benötigten Platzbedarf zu verringern und dadurch eine kompakte Ausgestaltung der zweiten Radachse zu ermöglichen, umfasst dieser Antriebsstrang an Stelle eines Achsdifferentials an der zweiten Radachse ein in einem größeren Abstand von der zweiten Radachse angeordnetes Doppeldifferential aus zwei wirkverbundenen Planetenraddifferentialen. Von den beiden Differentialen dient das erste als Mittendifferential, wobei es mit einer vom Antriebsaggregat und vom Getriebe kommenden Antriebswelle wirkverbunden und mit einer zur ersten Radachse führenden Abtriebswelle wirkverbindbar ist, während das zweite als Achsdifferential für die zweite Radachse dient und mit einer zur ersten Teilachse führenden ersten Verbindungswelle sowie mit einer zur zweiten Teilachse führenden zweiten Verbindungswelle wirkverbunden ist.

Der Antriebsstrang dient zum Übertragen eines Drehmoments zwischen dem Antriebsaggregat des Kraftfahrzeugs und den wenigstens zwei Radachsen. Somit sind sowohl die erste Radachse als auch die zweite Radachse durch den Antriebsstrang an das Antriebsaggregat angebunden. Beide Radachsen sind mithin angetriebene Radachsen, so dass das Kraftfahrzeug beispielsweise als allradangetriebenes Kraftfahrzeug vorliegt. Die erste Radachse ist dabei beispielsweise eine Vorderachse des Kraftfahrzeugs, während die zweite Radachse die Hinterachse des Kraftfahrzeugs darstellt. Es kann jedoch auch eine umgekehrte Konfiguration vorliegen. Die beiden Verbindungswellen dienen dazu, das Drehmoment zu der zweiten Radachse zu übertragen und auf die beiden Teilachsen aufzuteilen. Die Verbindungswellen sind insbesondere als Kardanwellen ausgebildet.

Weiterhin zeigt der Stand der Technik die gattungsgemäße Druckschrift US 6,523,633 B1, und weiterhin US 2010/0218632 A1, SE 126 044 C WO 91/06787 A1, JP 63-97432 A, RU 2 077 453 C1 sowie EP 2 368 742 A2.

Ausgehend hiervon liegt der Erfindung die Aufgabe zugrunde, einen Antriebsstrang der eingangs genannten Art dahingehend zu verbessern, dass er noch kompakter ausgestaltet werden kann.

Dies wird gemäß der Erfindung mit einem Antriebsstrang erreicht, der durch die Merkmale des Anspruchs 1 gekennzeichnet ist. Dabei ist es vorgesehen, dass das Hohlrad mit der Antriebswelle, das Sonnenrad mit einer von der ersten und der zweiten Verbindungswelle und der Planetenträger mit der anderen von der ersten und der zweiten Verbindungswelle wirkverbunden ist, und dass zwischen jeder von den beiden Verbindungswellen und der ersten Radachse eine separat schaltbare Kupplung angeordnet ist. Grundsätzlich ist das Differential ein über eine Antriebswelle mit dem Antriebsaggregat wirkverbundenes und wahlweise drehmomentaufteilend mit der ersten Radachse wirkverbindbares Einzeldifferential. Mit anderen Worten wird an Stelle eines Doppeldifferentials nur ein einziges Differential verwendet, das erstens direkt mit der Antriebswelle wirkverbunden ist, das zweitens drehmomentaufteilend mit der ersten und der zweiten Teilachse der zweiten Radachse verbunden ist und das drittens wahlweise auch noch drehmomentaufteilend mit der ersten Radachse wirkverbindbar ist.

Eine bevorzugte Ausgestaltung der Erfindung sieht vor, dass die erste und die zweite Teilachse durch eine erste und durch eine zweite Verbindungswelle drehmomentaufteilend mit dem Differential verbunden sind, und dass das Differential wahlweise über eine oder beide Verbindungswellen und eine Abtriebswelle drehmomentaufteilend mit der ersten Radachse wirkverbindbar ist.

Dieser Ausgestaltung der Erfindung liegt der Gedanke zugrunde, die erste Radachse an die beiden vom Differential zu den Teilachsen der zweiten Radachse führenden Verbindungswellen bzw. an den Ausgang des Differentials anzubinden, so dass auf ein Doppeldifferential verzichtet und daher der für das Differential erforderliche Bauraum beträchtlich verringert werden kann. Vorzugsweise ist die erste Radachse nicht fest an die beiden Verbindungswellen angebunden, so dass ein Allradantrieb auf Anforderung möglich ist, wobei je nach gewählter Anbindung der ersten Radachse an die beiden Verbindungswellen das vom Antriebsaggregat bereitgestellte Drehmoment in unterschiedlicher Weise auf die Räder des Kraftfahrzeugs aufgeteilt werden kann.

Das Antriebsaggregat ist somit über die Antriebswelle, das Einzeldifferential sowie die erste und die zweite Verbindungswelle nicht nur mit den beiden Teilachsen der zweiten Radachse wirkverbunden, sondern kann auch mit der ersten Radachse drehmomentaufteilend wirkverbunden werden.

Wie bei dem Antriebsstrang aus der eingangs genannten Deutschen Patentanmeldung 10 2012 021 513.4 erfolgt die Drehmomentübertragung vom Differential in Richtung der zweiten Radachse vorzugsweise mittels zweier Verbindungswellen, die vorteilhaft als Kardanwellen ausgebildet sind. Die erste Verbindungswelle ist dabei mit der ersten Teilachse der zweiten Radachse koppelbar beziehungsweise gekoppelt. Die zweite Verbindungswelle ist dagegen mit der zweiten Teilachse der zweiten Radachse koppelbar beziehungsweise gekoppelt. Weil die Drehmomentübertragung zu den beiden Teilachsen getrennt voneinander über die Verbindungswellen erfolgt, kann das Differential aus dem Bereich der zweiten Radachse weg verlegt und dadurch dort der Platzbedarf verkleinert werden.

Die Erfindung betrifft auch ein Kraftfahrzeug mit einem Antriebsstrang, der bevorzugt auf die vorstehend genannte Art ausgebildet ist. Das Kraftfahrzeug weist die erste Radachse und die zweite Radachse auf, wobei die zweite Radachse aus zumindest der ersten Teilachse und der zweiten Teilachse besteht.

Bei der bevorzugten Ausgestaltung der Erfindung zeichnet sich das Kraftfahrzeug durch eine mit der ersten Teilachse wirkverbundene erste Verbindungswelle, durch eine mit der zweiten Teilachse wirkverbundene zweite Verbindungswelle sowie durch ein mit beiden Verbindungswellen wirkverbundenes Einzeldifferential aus, das durch eine Antriebswelle mit dem Antriebsaggregat bzw. einem zum Antriebsaggregat zugehörigen Getriebe des Kraftfahrzeugs wirkverbunden ist und bei Bedarf wahlweise über eine oder beide Verbindungswellen und eine Abtriebswelle drehmomentaufteilend mit der ersten Radachse wirkverbindbar ist. Das Einzeldifferential verbindet somit die Antriebswelle drehmomentaufteilend mit der ersten und der zweiten Verbindungswelle und kann die Antriebswelle zudem über die ersten und/oder zweite Verbindungswelle drehmomentaufteilend mit der Abtriebswelle verbinden.

Dies bedeutet, dass ein Teil des über die Antriebswelle bereitgestellten Drehmoments, beispielsweise zu gleichen Teilen, an der ersten und an der zweiten Verbindungswelle und damit an der ersten bzw. zweiten Teilachse der zweiten Radachse bereitgestellt wird, wenn nur die zweite Radachse angetrieben werden soll. Wenn auch die erste Radachse angetrieben werden soll, kann wahlweise das an jeder der beiden Verbindungswellen bereitgestellte Drehmoment einzeln oder beide Drehmomente gemeinsam durch die Abtriebswelle teilweise zur ersten Radachse übertragen werden. Wenn das an beiden Verbindungswellen bereitgestellte Drehmoment zur ersten Radachse übertragen wird, werden alle Räder der beiden Radachsen mit etwa gleichen Drehmomenten angetrieben, sofern das Drehmoment der Antriebswelle im Differential zu gleichen Teilen auf die erste und die zweite Verbindungswelle bzw. auf die beiden Teilachsen der zweiten Radachse aufgeteilt wird.

In einer bevorzugten Ausgestaltung der Erfindung ist vorgesehen, dass das Differential ein Planetenraddifferential mit einem Sonnenrad, einem Hohlrad und einem Planetenträger sowie mit wenigstens einem mit dem Sonnenrad und dem Hohlrad kämmenden Planetenrad ist. Das Einzeldifferential weist also den bekannten Aufbau eines Planetengetriebes mit einem Sonnenrad, einem Hohlrad und zweckmäßig mehreren drehbar am Planetenträger gelagerten Planetenrädern auf, die mit dem Sonnenrad und mit dem Hohlrad kämmen.

Vorzugsweise ist das Hohlrad unmittelbar über die Antriebswelle mit dem Antriebsaggregat verbunden, während das Sonnenrad unmittelbar mit einer der beiden Verbindungswellen und der Planetenträger unmittelbar mit der anderen der beiden Verbindungswellen wirkverbunden ist. Unter einer unmittelbaren Wirkverbindung ist zu verstehen, dass die genannten Wellen jeweils direkt mit dem jeweiligen Element des Planetenraddifferentials verbunden sind.

Um eine wahlweise Anbindung der Abtriebswelle an eine oder beide Verbindungswellen zu ermöglichen, ist demgegenüber die Abtriebswelle durch zwei separate und unabhängig voneinander aktivierbare oder schaltbare Kupplungen an die beiden Verbindungswellen bzw. entsprechende Ausgänge des Differentials angebunden, wobei jede der beiden Kupplungen die Abtriebswelle mit einer der beiden Verbindungswellen bzw. dem mit der jeweiligen Verbindungswelle unmittelbar wirkverbundenen Element des Planetenraddifferentials verbindet, d.h. mit dem Sonnenrad im Fall der einen Verbindungswelle und mit dem Planetenträger im Fall der anderen Verbindungswelle.

Vorteilhaft umfasst eine der beiden Kupplungen eine mit der einen Verbindungswelle oder dem Sonnenrad des Planetenraddifferentials wirkverbundene Kupplungsscheibe, gegen deren äußerem Umfang mindestens zwei mit der Abtriebswelle wirkverbundene, zur Abtriebswelle koaxiale Kupplungsringe von entgegengesetzten Seiten her in Kupplungseingriff gebracht werden können. Die andere der beiden Kupplungen umfasst hingegen vorteilhaft eine mit der anderen Verbindungswelle oder mit dem Planetenträger des Planetenraddifferentials wirkverbundene Kupplungsscheibe, gegen deren äußeren Umfang ebenfalls mindestens zwei drehfest mit der Abtriebswelle verbundene, zur Abtriebswelle koaxiale Kupplungsringe von entgegengesetzten Seiten her in Kupplungseingriff gebracht werden können.

Die beiden Kupplungen sind geöffnet, wenn ausschließlich die zweite Radachse angetrieben werden soll. Wenn die erste Radachse mit einem verhältnismäßig geringen Drehmoment mit angetrieben werden soll, wird eine der beiden Kupplungen geschlossen, wodurch das an einem der Räder der zweiten Radachse bereitgestellte Drehmoment über die geschlossene Kupplung teilweise zur ersten Radachse übertragen wird. Wenn die erste Radachse mit einem größeren Drehmoment mit angetrieben werden soll, werden beide Kupplungen geschlossen, wodurch die an den beiden Rädern der zweiten Radachse bereitgestellten Drehmomente über die geschlossenen Kupplungen jeweils teilweise zur ersten Radachse übertragen werden. Durch eine entsprechende Betätigung der Kupplungen kann somit gezielt Drehmoment von der ersten und/oder zweiten Teilachse der zweiten Radachse auf die erste Radachse verlagert werden. Durch die Betätigung beider Kupplungen wird das Differential gesperrt. Bei den Kupplungen handelt es sich vorteilhaft um Reibkupplungen, die auch bei größeren Drehzahlunterschieden geschlossen werden können. Wird eine solche Reibkupplung derart angesteuert, dass die Kupplung nicht ganz geschlossen und zwischen den Kupplungselementen ein Schlupf vorhanden ist, wird nur ein geringeres Drehmoment zur ersten Radachse übertragen, was weitere Variationsmöglichkeiten des Torque-Vectoring bzw. Torque-Splitting ergibt.

Alternativ zu den zuvor beschriebenen Ausgestaltungen können die separaten bzw. getrennt schaltbaren Kupplungen auch zwischen jeder von den beiden Teilachsen und der ersten Radachse angeordnet sein, so dass wahlweise eine oder beide Teilachsen mit der ersten Radachse wirkverbindbar sind. In diesem Fall ist zweckmäßig eine der beiden Kupplungen zwischen einer zur ersten Radachse führenden Abtriebswelle und der ersten Teilachse sowie und einem drehfest mit der ersten Teilachse wirkverbundenen Element des Differentials angeordnet, während die andere der beiden Kupplungen zwischen der Abtriebswelle und der zweiten Teilachse sowie einem mit der zweiten Teilachse wirkverbundenen anderen Element des Differentials angeordnet ist.

Eine vorteilhafte Weiterbildung der Erfindung sieht vor, dass das Planetenraddifferential ein Doppelplanetengetriebe umfasst, bei dem der Planetenträger zumindest ein radial äußeres Außenplanetenrad und zumindest ein radial inneres Innenplanetenrad aufweist, wobei das Außenplanetenrad mit dem zweiten Hohlrad und dem Innenplanetenrad kämmt, während das Innenplanetenrad mit dem Außenplanetenrad und dem Sonnenrad kämmt. Sowohl das Außenplanetenrad als auch das Innenplanetenrad sind drehbar am Planetenträger gelagert. Das Außenplanetenrad und das Innenplanetenrad können bezüglich einer Drehachse des Planetenträgers in unterschiedlichen Winkelpositionen angeordnet sein.

Obwohl es grundsätzlich möglich ist, die beiden Verbindungswellen zwischen dem Differential und der zweiten Radachse mindestens teilweise parallel nebeneinander anzuordnen, ist es von Vorteil, wenn die erste und die zweite Verbindungswelle koaxial zueinander angeordnet sind, wobei eine der beiden Verbindungswellen als Hohlwelle ausgebildet ist, durch die sich die als Zentralwelle ausbildete andere Verbindungswelle erstreckt. Dadurch können zum einen die beiden Verbindungswellen äußerst platzsparend untergebracht und zum anderen eine Verringerung des Wirkungsgrades vermieden werden, die sich bei einer parallelen Anordnung der beiden Verbindungswellen infolge der Notwendigkeit eines zusätzlichen Stirnrad- oder Kettentriebs zur Anbindung der in Bezug zur Drehachse des Sonnen- und Hohlrades des Planetenraddifferentials versetzten Verbindungswelle ergeben würde.

Im Fall einer koaxialen Anordnung der beiden Verbindungswellen sind gemäß einer weiteren bevorzugten Ausgestaltung der Erfindung zwischen den beiden koaxialen Verbindungswellen zwei entgegengesetzt wirkende Axiallager angeordnet, so dass die als Zentralwelle ausgebildete Verbindungswelle in der als Hohlwelle ausgebildeten Verbindungswelle indirekt gelagert ist. Diese bevorzugte Ausgestaltung der Erfindung ist nicht nur bei den zuvor beschriebenen Antriebssträngen von Vorteil, sondern allgemein bei Radachsen mit zwei Teilachsen, die von zwei koaxialen Verbindungs- oder Kardanwellen über jeweils ein Kegelradgetriebe angetrieben werden, sowie auch bei Radachsen mit konventionellen Getrieben, bei denen zwei Teilachsen über Kegelradgetriebe und zwei kurze koaxiale Verbindungswellen von einem als Planetenraddifferential ausgebildeten Achsdifferential angetrieben werden.

Bei dieser Ausgestaltung kann durch die indirekte Lagerung der als Zentralwelle ausgebildeten inneren Verbindungs- oder Kardanwelle in der äußeren, als Hohlwelle ausgebildeten Verbindungs- oder Kardanwelle erreicht werden, dass sich die Axialkräfte weitgehend kompensieren.

Eine Ausgestaltung der Erfindung sieht vor, dass das mit der ersten Teilachse verbundene Tellerrad von einem der beiden Kegelradgetriebe und das mit der zweiten Teilachse verbundene Tellerrad von dem anderen der beiden Kegelradgetriebe in axialer Richtung der beiden Verbindungswellen einen gewissen Versatz aufweisen. In diesem Fall können die Tellerräder der beiden Kegelradgetriebe denselben Durchmesser aufweisen, wodurch die Anzahl der Gleichteile vergrößert werden kann.

Eine andere Ausgestaltung der Erfindung sieht hingegen vor, dass die erste und die zweite Teilachse mit der ersten und der zweiten Verbindungswelle jeweils über Kegelradgetriebe mit unterschiedlich großen Tellerraddurchmessern verbunden sind. In diesem Fall können die erste und die zweite Teilachse in axialer Richtung der beiden Verbindungswellen fluchtende Drehachsen aufweisen. Dies hat den Vorteil, dass eine der Teilachsen durch eine Stützachse verlängert werden kann, auf der sich das mit der anderen Teilachse verbundene Tellerrad über zwei Axiallager abstützen kann. Dies hat den Vorteil, dass sich die axialen Verzahnungskräfte zwischen dem Tellerrad und dem Ritzel von jedem Kegelradgetriebe gegenseitig kompensieren, und dadurch weniger lastabhängige Lagerverluste auftreten.

Die Erfindung betrifft weiterhin einen Antriebsstrang eines Kraftfahrzeugs zwischen einem Antriebsaggregat und einer ersten Radachse sowie einer zweiten Radachse, wobei die zweite Radachse aus zumindest einer ersten Teilachse und einer zweiten Teilachse besteht, und wobei die erste und die zweite Teilachse drehmomentaufteilend mit einem Differential verbunden sind, wobei das Differential ein über eine Antriebswelle mit dem Antriebsaggregat wirkverbundenes und wahlweise drehmomentaufteilend mit der ersten Radachse wirkverbindbares Einzeldifferential ist, und wobei das Differential ein Planetenraddifferential mit einem Sonnenrad, einem Hohlrad und einem Planetenträger mit wenigstens einem mit dem Sonnenrad und dem Hohlrad kämmenden Planetenrad ist. Dabei ist vorgesehen, dass das Hohlrad mit der Antriebswelle, das Sonnenrad mit einer von der ersten und der zweiten Verbindungswelle und der Planetenträger mit der anderen von der ersten und der zweiten Verbindungswelle wirkverbunden ist, und dass zwischen jeder von den beiden Verbindungswellen und der ersten Radachse eine separat schaltbare Kupplung angeordnet ist. Weiterhin ist vorgesehen, dass zwischen jeder von den beiden Teilachsen und der ersten Radachse eine der separat schaltbaren Kupplungen angeordnet ist, wobei eine der beiden Kupplungen zwischen der Abtriebswelle und der ersten Teilachse und einen drehfest mit der ersten Teilachse wirkverbundenen Element des Differentials angeordnet ist, und wobei die andere der beiden Kupplungen zwischen der Abtriebswelle und der zweiten Teilachse und eine mit der zweiten Teilachse wirkverbundenen Element des Differentials angeordnet ist.

Die Erfindung wird nachfolgend anhand der in der Zeichnung dargestellten Ausführungsformen und einigen Varianten näher erläutert, ohne dass eine Beschränkung der Erfindung erfolgt. Dabei zeigt:
- Figur 1: eine schematische Darstellung einer ersten Ausführungsform eines Antriebsstrangs;
- Figur 2: eine schematische Darstellung einer zweiten Ausführungsform des Antriebsstrangs;
- Figur 3: eine schematische Darstellung einer dritten Ausführungsform des Antriebsstrangs;
- Figur 4: eine schematische Darstellung von Teilen einer vierten Ausführungsform des Antriebsstrangs;
- Figur 5: eine schematische Darstellung entsprechend Fig. 4, jedoch von einer Variante;
- Figur 6: eine schematische Darstellung von Teilen einer nicht erfindungsgemäßen Ausführungsform eines Antriebsstrangs;
- Figur 7: eine schematische Darstellung entsprechend Fig. 6, jedoch von einer Variante;
- Figur 8: eine schematische Darstellung einer fünften Ausführungsform des Antriebsstrangs.

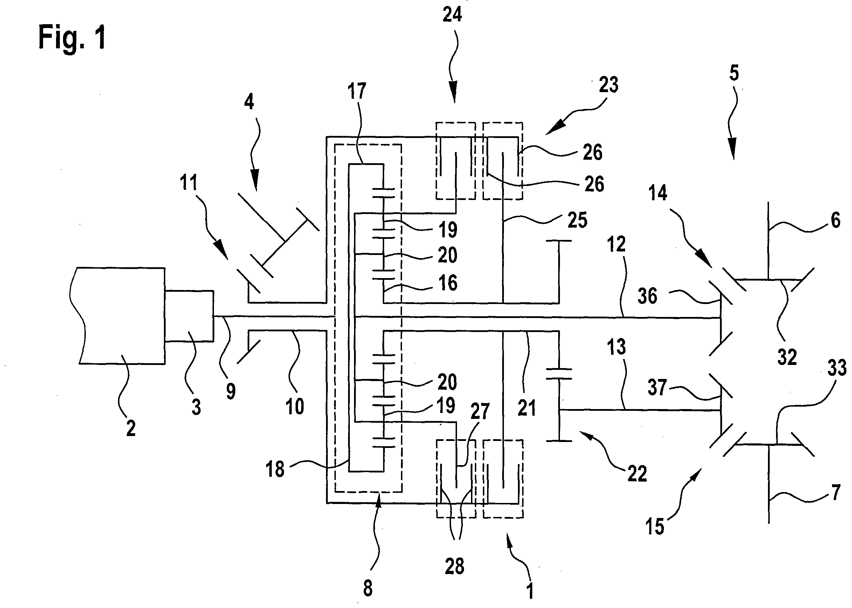

Die Figur 1 zeigt eine erste Ausführungsform eines Antriebsstrangs 1 eines Kraftfahrzeugs, welches hier nicht näher dargestellt ist. Das Kraftfahrzeug weist ein Antriebsaggregat 2, ein Getriebe 3, eine als Vorderachse ausgebildete erste Radachse 4 und eine als Hinterachse ausgebildete zweite Radachse 5 auf, die hier lediglich schematisch angedeutet sind, wobei die zweite Radachse 5 aus zumindest einer ersten Teilachse 6 und einer zweiten Teilachse 7 besteht. Der Antriebsstrang 1 verfügt über ein Planetenraddifferential 8, das durch eine Antriebswelle 9 mit dem Getriebe 3 wirkverbunden ist. Zwischen dem Differential 8 und der ersten Radachse 4 ist eine Abtriebswelle 10 angeordnet, die über eine Zahnradstufe 11 mit der ersten Radachse 4 wirkverbunden ist. Zwischen dem Differential 8 und der zweiten Radachse 5 sind eine erste und eine zweite Verbindungswelle 12, 13 angeordnet, von denen die erste Verbindungswelle 12 über ein erstes Kegelradgetriebe 14 mit ersten Teilachse 6 und die zweite Verbindungswelle 13 über ein zweites Kegelradgetriebe 15 mit der zweiten Teilachse 7 wirkverbunden ist.

Das als Doppelplanetengetriebe ausgebildete Planetenraddifferential 8 besteht aus einem Sonnenrad 16, einem Hohlrad 17 und einem Planetenträger 18, an dem mehrere radial äußere Außenplanetenräder 19 und mehrere radial innere Innenplanetenräder 20 drehbar gelagert sind. Die Außenplanetenräder 19 kämmen mit dem Hohlrad 17 und mit den Innenplanetenrädern 20. Die Innenplanetenräder 20 kämmen mit den Außenplanetenrädern 19 und mit dem Sonnenrad 16. Damit werden durch eine Drehung des Hohlrades 17 sowohl der Planetenträger 18 als auch das Sonnenrad 16 drehend angetrieben.

Das Hohlrad 17 des Planetenraddifferentials 8 ist mit der Antriebswelle 9 und über diese mit dem Getriebe 3 und dem Antriebsaggregat 2 verbunden. Der Planetenträger 18 ist drehfest mit der ersten Verbindungswelle 12 verbunden. Das Sonnenrad 16 ist über eine als Hohlwelle ausgebildete Ausgangswelle 21 und eine Zahnradstufe 22 mit Stirnverzahnung mit der Verbindungswelle 13 wirkverbunden. Die erste Verbindungswelle 12 ist koaxial zur Ausgangswelle 21 und erstreckt sich durch diese hindurch.

Zwischen der Ausgangswelle 21 und der Abtriebswelle 10 ist eine erste Kupplung 23 angeordnet, durch welche die zweite Verbindungswelle 13 über die Zahnradstufe 22 und die Ausgangswelle 21 mit der Abtriebswelle 10 wirkverbindbar ist. Zwischen dem Planetenträger 18 und der Abtriebswelle 10 ist eine zweite Kupplung 24 angeordnet, durch welche die erste Verbindungswelle 12 über den Planetenträger 18 mit der Abtriebswelle 10 wirkverbindbar ist. Die beiden Kupplungen 23 und 24 sind Reibkupplungen und sind geöffnet, wenn nur die Räder der zweiten Radachse 5 angetrieben werden sollen. Die beiden Kupplungen 23 und 24 sind auf der zur Radachse 5 benachbarten Seite des Differentials 8 angeordnet.

Die Kupplung 23 umfasst eine drehfest mit der Getriebeausgangswelle 21 verbundene Kupplungsscheibe 25, gegen die beim Schließen der Kupplung 23 zwei Kupplungsringe 26 von entgegengesetzten Seiten angepresst werden können. Die Kupplung 24 umfasst eine drehfest mit dem Planetenträger 18 verbundene Kupplungsscheibe 27, gegen die beim Schließen der Kupplung 24 zwei Kupplungsringe 28 von entgegengesetzten Seiten angepresst werden können. Die Kupplungsringe 26 und 28 sind drehfest miteinander und mit der Abtriebswelle 10 verbunden.

Wenn die erste Radachse 4 mit einem verhältnismäßig geringen Drehmoment mit angetrieben werden soll, wird nur die Kupplung 23 oder nur die Kupplung 24 geschlossen. Wenn nur die Kupplung 23 geschlossen wird, wird das vom Antriebsaggregat 2 zur ersten Teilachse 7 gelieferte Drehmoment über die Kupplung 23 teilweise zur ersten Radachse 4 übertragen oder umgeleitet. Wenn nur die Kupplung 24 geschlossen wird, wird das vom Antriebsaggregat 2 zur zweiten Teilachse 6 gelieferte Drehmoment über die Kupplung 24 teilweise zur ersten Radachse 4 übertragen oder umgeleitet. Wenn die erste Radachse 4 mit einem größeren Drehmoment mit angetrieben werden soll, werden beide Kupplungen 23 und 24 geschlossen. In diesem Fall wird das vom Antriebsaggregat 2 zu beiden Teilachsen 6 und 7 gelieferte Drehmoment über die beiden Kupplungen 23 und 24 jeweils teilweise zur ersten Radachse 4 übertragen oder umgeleitet. In diesem Fall wird das Differential 8 gesperrt. Durch Schließen der Kupplungen 23, 24 ist somit ein Torque-Splitting zwischen der ersten Radachse 4 und der zweiten Radachse 5 möglich.

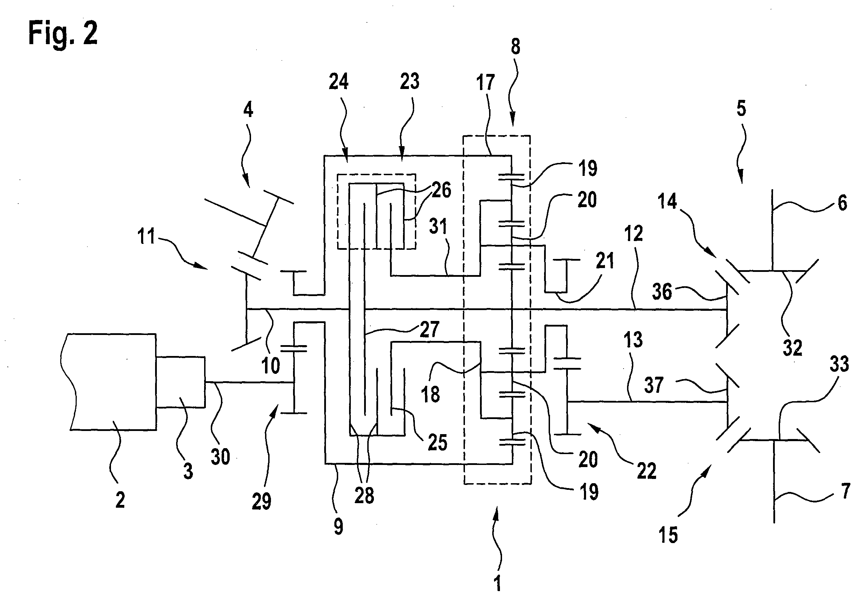

Während bei der in Figur 1 dargestellten ersten Ausführungsform die Abtriebswelle 10 als Hohlwelle ausgebildet ist, durch welche die Antriebswelle 9 als Zentralwelle hindurchgeführt ist, erstreckt sich bei der in Figur 2 dargestellten zweiten Ausführungsform die Abtriebswelle 10 als Zentralwelle durch die als Hohlwelle ausgebildete Antriebswelle 9 hindurch, die dort durch eine zusätzliche Getriebestufe 29 mit Stirnradverzahnung mit einer Ausgangswelle 30 des Getriebes 3 wirkverbunden ist.

Bei der zweiten Ausführungsform sind die beiden Kupplungen 23 und 24 außerdem auf der zur Radachse 4 benachbarten Seite des Differentials 8 angeordnet. Die erste Kupplung 23 ist zwischen der Abtriebswelle 10 und einer weiteren Ausgangswelle 31 des Differentials 8 angeordnet, die drehfest mit dem Planetenträger 18 und über diesen, die Innenplanetenräder 20, die Ausgangswelle 21 und die Zahnradstufe 22 mit der zweiten Verbindungswelle 13 wirkverbunden ist. Die zweite Kupplung 24 ist zwischen der Abtriebswelle 10 und der ersten Verbindungswelle 12 angeordnet, die sich durch das Differential 8 hindurch erstreckt und drehfest mit dem Sonnenrad 16 verbunden ist. Die übrigen Merkmale der zweiten Ausführungsform entsprechen im Wesentlichen denjenigen der ersten Ausführungsform.

Wenn bei der zweiten Ausführungsform die Kupplung 23 geschlossen wird, wird das vom Antriebsaggregat 2 zur zweiten Teilachse 7 gelieferte Drehmoment über die Kupplung 23 teilweise zur ersten Radachse 4 umgeleitet. Wenn die Kupplung 24 geschlossen wird, wird das vom Antriebsaggregat 2 zur ersten Teilachse 6 gelieferte Drehmoment über die Kupplung 24 teilweise zur ersten Radachse 4 umgeleitet.

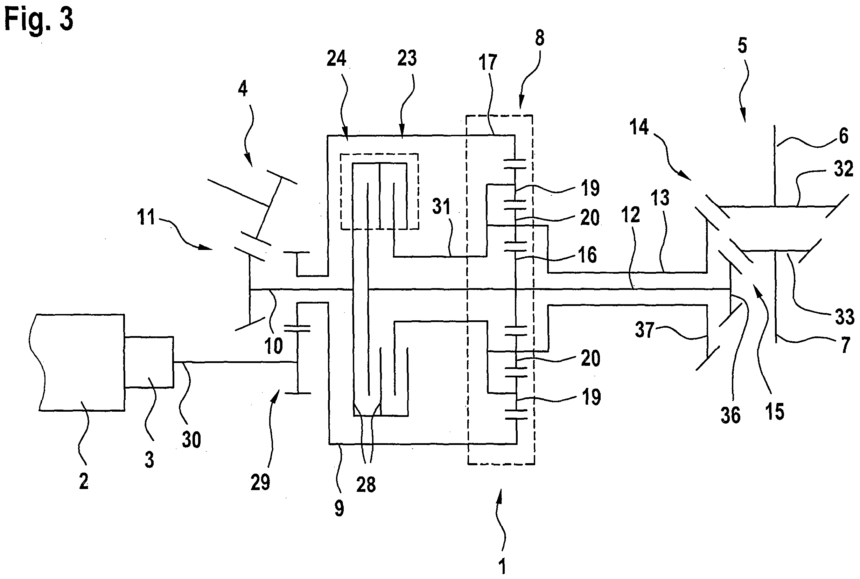

Die in Figur 3 dargestellte Ausführungsform entspricht mit Ausnahme des zwischen dem Differential 8 und den beiden Teilachsen 6 und 7 angeordneten Teils des Antriebsstrangs 1 der Ausführungsform der Figur 2. Um den Platzbedarf des Antriebsstrangs 1 zwischen dem Differential 8 und den Teilachsen zu verringern und den Wirkungsgrad zu erhöhen, sind bei der Ausführungsform der Figur 3 die beiden Verbindungswellen 12, 13 koaxial zueinander, wobei die Welle 13 als Hohlwelle ausgebildet ist, durch die sich die Welle 12 hindurch erstreckt. Darüber hinaus weisen bei dieser Ausführungsform die drehfest mit den beiden Teilachsen 6 und 7 verbundenen Tellerräder 32, 33 beider Kegelradgetriebe 14, 15 Kegelverzahnungen auf, die in dieselbe Richtung geneigt sind, anders als bei den zuvor beschriebenen Ausführungsformen, wo die Neigungsrichtung der Kegelverzahnungen der Tellerräder 32, 33 unterschiedlich ist.

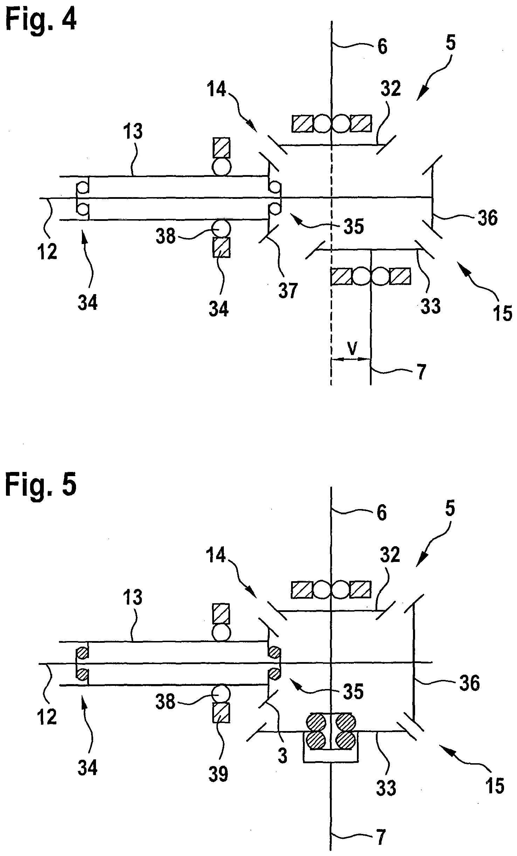

Die Figuren 4 und 5 zeigen zwei Varianten der dritten Ausführungsform, die nicht nur bei dem zuvor beschriebenen Antriebsstrang 1, sondern generell bei Antriebssträngen 1 mit zwei koaxialen Kardan- oder Verbindungswellen 12, 13 eingesetzt werden können.

Wie in Fig. 4 und 5 dargestellt, sind zwischen der als Hohlwelle ausgebildeten Verbindungswelle 13 und der als Zentralwelle ausgebildeten Verbindungswelle 12 zwei Axiallager 34, 35 angeordnet, in denen die Verbindungswelle 12 in der Verbindungswelle 13 gelagert ist. Die Verbindungswelle 13 ist wiederum in mindestens einem Lager 38 in Bezug zu einem umgebenden Gehäuse 39 gelagert, so dass die Verbindungswelle 12 indirekt im Gehäuse 39 gelagert ist. Dabei stützt sich die Verbindungswelle 12 in den beiden Axiallagern 34, 35 in entgegengesetzte Richtungen ab, wodurch sich die auftretenden Axialkräfte weitgehend kompensieren.

Während bei der Variante in Figur 4 die drehfest mit den Teilachsen 6 bzw. 7 der zweiten Radachse 5 verbundenen Tellerräder 32, 33 der Kegelradgetriebe 14, 15 in axialer Richtung der beiden Verbindungswellen 12, 13 einen Versatz V aufweisen, jedoch gleiche Durchmesser besitzen, weisen bei der Variante in Figur 5 die Tellerräder 32, 33 und damit auch die drehfest mit den Verbindungswellen 12 und 13 verbundenen Ritzel 36, 37 der beiden Kegelradgetriebe 14, 15 unterschiedlich große Durchmesser auf, während die Tellerräder 32, 33 der Teilachsen 6 und 7 der zweiten Radachse 5 miteinander fluchten. Bei der Variante in Figur 5 ist darüber hinaus eine zusätzliche, drehfest mit der Teilachse 6 und mit dem Tellerrad 32 verbundene Stützwelle vorgesehen, die sich über das Tellerrad 32 hinaus bis zum Tellerrad 33 erstreckt, wo sich das letztere in zwei entgegengesetzten Axiallagern auf der Stützwelle abstützt. Dadurch ist auch eine Kompensation der Tellerrad-Axialkräfte möglich, so dass nur noch die resultierenden Axialkräfte in die gehäusefesten Lager 38 eingeleitet werden. Um es zu ermöglichen, die Stützwelle an der Verbindungswelle 12 vorbeizuführen, weisen die Kegelradgetriebe 14, 15 bei der Variante in Fig. 5 in Richtung der Hochachse des Kraftfahrzeugs einen Hypoidversatz von mindestens 25 bis 30 mm auf.

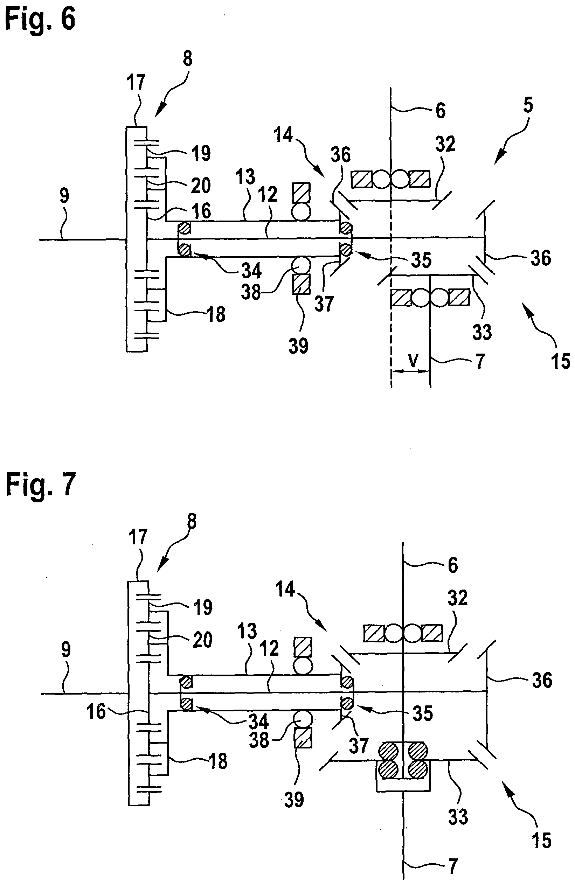

Die Figuren 6 und 7 zeigen zwei Varianten einer konventionellen zweiten Radachse 5 oder Hinterachse mit zwei Teilachsen 6, 7 und einem als Planetenraddifferential ausgebildeten Differential 8, das durch zwei kurze koaxiale Verbindungswellen 12, 13 mit den Ritzeln 36, 37 von zwei Kegelradgetrieben 14, 15 wirkverbunden ist, deren Tellerräder 32, 33 drehfest mit den beiden Teilachsen 6, 7 verbunden sind.

Wie in Figur 4 weisen bei der Variante in Figur 6 wieder die beiden Tellerräder 32, 33 in axialer Richtung der beiden Verbindungswellen 12, 13 einen Versatz V auf und besitzen gleiche Durchmesser. Bei der Variante in Figur 7 weisen wie in Figur 5 die Tellerräder 32, 33 unterschiedlich große Durchmesser auf, während die Tellerräder 32, 33 der Teilachsen 6 und 7 miteinander fluchten. Auch dort ist eine zusätzliche Stützwelle zwischen der Teilachse 6 und dem Tellerrad 33 vorgesehen, gegen die sich das Tellerrad 33 in zwei Axiallagern abstützt, um die Tellerrad-Axialkräfte zu kompensieren. Auch hier weisen die Kegelradgetriebe 14, 15 in Richtung der Hochachse des Kraftfahrzeugs einen Hypoidversatz von mindestens 25 bis 30 mm auf.

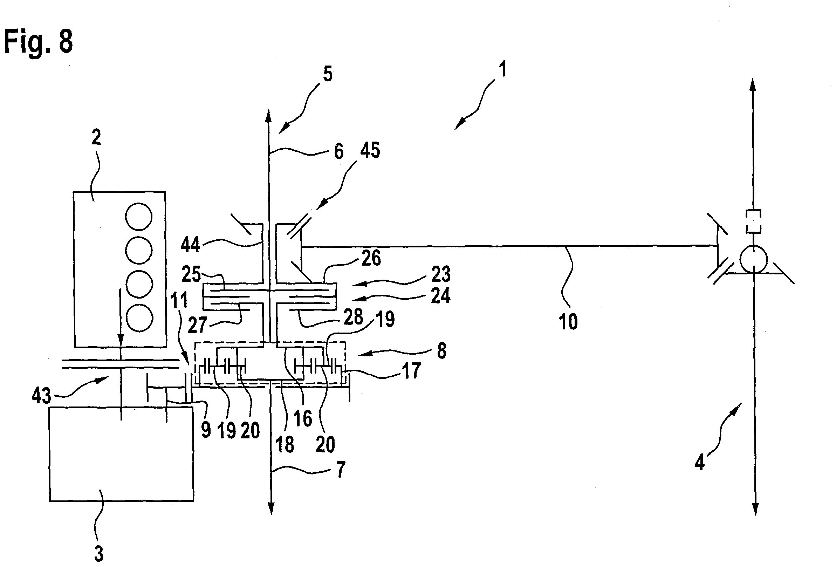

Die Figur 8 zeigt eine fünfte Ausführungsform eines Antriebsstrangs 1, die für ein Kraftfahrzeug mit einem quer verbauten Antriebsaggregat 2 und einem DQ- oder MQ-Getriebe 3 bestimmt ist, wobei zwischen dem Antriebsaggregat 2 und dem Getriebe 3 eine weitere Kupplung 43 vorgesehen ist. Anders als bei den Ausführungsformen in den Figuren 1 bis 3 weist der Antriebsstrang 1 in Figur 5 eine als Hinterachse ausgebildete erste Radachse 4 und eine als Vorderachse ausgebildete zweite Radachse 5 auf. Die erste Radachse 4 ist nach Bedarf zu- oder abschaltbar, während die zweite Radachse 5 aus zumindest einer ersten Teilachse 6 und einer zweiten Teilachse 7 besteht. Bei dem Differential 8 handelt es sich nicht wie bei der Ausführungsform in Fig. 6 und 7 um ein Hinterachsdifferential, sondern um ein im Bereich der zweiten Radachse 5 angeordnetes Vorderachsdifferential, das durch wie die zuvor beschriebenen Differentiale 8 durch eine Antriebswelle 9 und eine Zahnradstufe 11 mit dem Getriebe 3 wirkverbunden ist.

Zwischen dem Differential 8 und der ersten Radachse 4 ist eine Abtriebswelle 10 angeordnet, die mit Hilfe von zwei Kupplungen 23, 24 wahlweise mit der ersten Teilachse 6 oder mit der zweiten Teilachse 7 gekuppelt bzw. wirkverbunden werden kann, um das vom Antriebsaggregat 2 an der ersten Teilachse 6 und/oder an der zweiten Teilachse 7 bereitgestellte Antriebsmoment über die geschlossene Kupplung 23 bzw. 24 teilweise zur ersten Radachse 4 zu übertragen. Bei den beiden Kupplungen 23 bzw. 24 handelt es sich wie zuvor um Reibkupplungen, die jeweils eine Kupplungsscheibe 25 bzw. 27 und zwei Kupplungsringe 26 bzw. 28 umfassen, welche beim Schließen der Kupplung 23 bzw. 24 von entgegengesetzten Seiten gegen die zugehörige Kupplungsscheibe 25 bzw. 27 angepresst werden. Die Kupplungsringe 26, 28 der beiden Kupplungen 23, 24 sind drehfest miteinander verbunden. Die beiden Kupplungen 23, 24 besitzen eine mit den Kupplungsringen 26, 28 verbundene gemeinsame Ausgangswelle 44, die über ein Kegelradgetriebe 45 mit der in Längsrichtung des Kraftfahrzeugs verlaufenden Abtriebswelle 10 verbunden ist. Die Abtriebswelle 10 kann als Kardanwelle ausgebildet sein.

Wie zuvor ist das Differential 8 als Doppelplanetengetriebe ausgebildet und besteht aus einem Sonnenrad 16, einem Hohlrad 17 und einem Planetenträger 18, an dem mehrere radial äußere Außenplanetenräder 19 und mehrere radial innere Innenplanetenräder 20 drehbar gelagert sind. Die Außenplanetenräder 19 kämmen mit dem Hohlrad 17 und mit den Innenplanetenrädern 20. Die Innenplanetenräder 20 kämmen mit den Außenplanetenrädern 19 und mit dem Sonnenrad 16.

Das Hohlrad 17 wird von der Antriebswelle 9 über die Zahnradstufe 11 angetrieben. Das Sonnenrad 16 ist drehfest mit der ersten Teilachse 6 und mit der Kupplungsscheibe 25 der ersten Kupplung 23 verbunden. Der Planetenträger 18 ist drehfest mit der anderen Teilachse 7 und mit der Kupplungsscheibe 27 der zweiten Kupplung 24 verbunden.

Wenn bei der fünften Ausführungsform die Kupplung 23 geschlossen wird, wird das vom Antriebsaggregat 2 zur ersten Teilachse 6 gelieferte Drehmoment über die Kupplung 23, die Ausgangswelle 44, das Kegelradgetriebe 45 und die Abtriebswelle 10 teilweise zur ersten Radachse 4 umgeleitet. Wenn die Kupplung 24 geschlossen wird, wird das vom Antriebsaggregat 2 zur zweiten Teilachse 7 gelieferte Drehmoment über die Kupplung 24 teilweise zur ersten Radachse 4 umgeleitet. Wenn die erste Radachse 4 mit einem größeren Drehmoment mit angetrieben werden soll, werden beide Kupplungen 23 und 24 geschlossen. In diesem Fall wird das vom Antriebsaggregat 2 zu den beiden Teilachsen 6 und 7 gelieferte Drehmoment über die beiden Kupplungen 23 und 24 jeweils teilweise zur ersten Radachse 4 übertragen oder umgeleitet. In diesem Fall wird wieder das Differential 8 gesperrt. Durch Schließen der Kupplungen 23, 24 ist somit auch hier ein Torque-Splitting zwischen der ersten Radachse 4 und der zweiten Radachse 5 möglich.
- 34: Axiallager
- 35: Axiallager
- 36: Ritzel
- 37: Ritzel
- 38: Lager
- 39: Gehäuse
- 40: Stützwelle
- 41: Axiallager
- 42: Axiallager
- 43: Kupplung
- 44: Ausgangswelle
- 45: Kegelradgetriebe
- V: Versatz

## Patentansprüche

1. Antriebsstrang (1) eines Kraftfahrzeugs zwischen einem Antriebsaggregat (2) und einer ersten Radachse (4) sowie einer zweiten Radachse (5), wobei die zweite Radachse (5) aus zumindest einer ersten Teilachse (6) und einer zweiten Teilachse (7) besteht, und wobei die erste und die zweite Teilachse (6, 7) durch eine erste und durch eine zweite Verbindungswelle (12, 13) drehmomentaufteilend mit einem Differential (8) verbunden sind, wobei das Differential (8) ein über eine Antriebswelle (9) mit dem Antriebsaggregat (2) wirkverbundenes und wahlweise drehmomentaufteilend mit der ersten Radachse (4) wirkverbindbares Einzeldifferential (8) ist, und wobei das Differential (8) ein Planetenraddifferential mit einem Sonnenrad (16), einem Hohlrad (17) und einem Planetenträger (18) mit wenigstens einem mit dem Sonnenrad (16) und dem Hohlrad (17) kämmenden Planetenrad (19, 20) ist, **dadurch gekennzeichnet, dass** das Hohlrad (17) mit der Antriebswelle (9), das Sonnenrad (16) mit einer von der ersten und der zweiten Verbindungswelle (12, 13) und der Planetenträger (18) mit der anderen von der ersten und der zweiten Verbindungswelle (12, 13) wirkverbunden ist, und dass zwischen jeder von den beiden Verbindungswellen (12, 13) und der ersten Radachse (4) eine separat schaltbare Kupplung (23, 24) angeordnet ist.

2. Antriebsstrang nach Anspruch 1, **dadurch gekennzeichnet, dass** das Differential wahlweise über eine oder beide Verbindungswellen (12, 13) und eine Abtriebswelle (10) drehmomentaufteilend mit der ersten Radachse (4) wirkverbindbar ist.

3. Antriebsstrang nach Anspruch 1 oder 2, **dadurch gekennzeichnet, dass** der Planetenträger (18) zumindest ein Außenplanetenrad (19) und zumindest ein Innenplanetenrad (20) aufweist, die miteinander kämmen, wobei das Außenplanetenrad (19) mit dem Hohlrad (17) und das Innenplanetenrad (20) mit dem Sonnenrad (16) kämmt.

4. Antriebsstrang nach einem der vorangehenden Ansprüche, **dadurch gekennzeichnet, dass** eine (23) der beiden Kupplungen (23, 24) zwischen der Abtriebswelle (10) und einer (12) von der ersten und der zweiten Verbindungswelle (12, 13) oder einem mit dieser Verbindungswelle (12) wirkverbundenen Element (18) des Differentials (8) angeordnet ist und dass die andere (24) der beiden Kupplungen (23, 24) zwischen der Abtriebswelle (10) und der anderen (13) von der ersten und der zweiten Verbindungswelle (12, 13) oder einem mit dieser Verbindungswelle (12) wirkverbundenen Element (16) des Differentials (8) angeordnet ist.

5. Antriebsstrang nach einem der vorangehenden Ansprüche, **dadurch gekennzeichnet, dass** zwischen jeder von den beiden Teilachsen (6, 7) und der ersten Radachse (4) eine separat schaltbare Kupplung (23, 24) angeordnet ist.

6. Antriebsstrang nach Anspruch 5, **dadurch gekennzeichnet, dass** eine (23) der beiden Kupplungen (23, 24) zwischen der Abtriebswelle (10) und der ersten Teilachse (6) und einem drehfest mit der ersten Teilachse (6) wirkverbundenen Element (16) des Differentials (8) angeordnet ist und dass die andere (24) der beiden Kupplungen (23, 24) zwischen der Abtriebswelle (10) und der zweiten Teilachse (7) und einem mit der zweiten Teilachse (7) wirkverbundenen Element (18) des Differentials (8) angeordnet ist.

7. Antriebsstrang nach einem der vorangehenden Ansprüche, **dadurch gekennzeichnet, dass** die erste und die zweite Verbindungswelle (12, 13) oder die Abtriebswelle (10) Kardanwellen sind.

8. Antriebsstrang nach einem der vorangehenden Ansprüche, **gekennzeichnet durch** eine über ein Kegelradgetriebe (14) mit der ersten Teilachse (6) wirkverbundene erste Verbindungswelle (12) und eine zur ersten Verbindungswelle (12) koaxiale, mit der zweiten Teilachse (7) wirkverbundene zweite Verbindungswelle (13), wobei zwischen den beiden koaxialen Verbindungswellen (12, 13) zwei entgegengesetzt wirkende Axiallager (34, 35) angeordnet sind.

9. Antriebsstrang nach Anspruch 8, **dadurch gekennzeichnet, dass** die beiden Kegelradgetriebe (14, 15) Tellerräder (32, 33) mit unterschiedlich großen Tellerraddurchmessern aufweisen.

10. Antriebsstrang nach Anspruch 8 oder 9, **dadurch gekennzeichnet, dass** sich ein Tellerrad (33) von einem (15) der beiden Kegelradgetriebe (14, 15) über zwei Axiallager (41, 42) auf einer Stützwelle (40) abstützt, die drehfest mit einem Tellerrad (32) von dem anderen (14) der beiden Kegelradgetriebe (14, 15) verbunden ist.

11. Antriebsstrang (1) eines Kraftfahrzeugs zwischen einem Antriebsaggregat (2) und einer ersten Radachse (4) sowie einer zweiten Radachse (5), wobei die zweite Radachse (5) aus zumindest einer ersten Teilachse (6) und einer zweiten Teilachse (7) besteht, und wobei die erste und die zweite Teilachse (6, 7) drehmomentaufteilend mit einem Differential (8) verbunden sind, wobei das Differential (8) ein über eine Antriebswelle (9) mit dem Antriebsaggregat (2) wirkverbundenes und wahlweise drehmomentaufteilend mit der ersten Radachse (4) wirkverbindbares Einzeldifferential (8) ist, und wobei das Differential (8) ein Planetenraddifferential mit einem Sonnenrad (16), einem Hohlrad (17) und einem Planetenträger (18) mit wenigstens einem mit dem Sonnenrad (16) und dem Hohlrad (17) kämmenden Planetenrad (19, 20) ist, **dadurch gekennzeichnet, dass** das Hohlrad (17) mit der Antriebswelle (9), das Sonnenrad (16) mit einer von der ersten und der zweiten Verbindungswelle (12, 13) und der Planetenträger (18) mit der anderen von der ersten und der zweiten Verbindungswelle (12, 13) wirkverbunden ist, und dass zwischen jeder von den beiden Verbindungswellen (12, 13) und der ersten Radachse (4) eine separat schaltbare Kupplung (23, 24) angeordnet ist, wobei zwischen jeder von den beiden Teilachsen (6, 7) und der ersten Radachse (4) eine der separat schaltbaren Kupplungen (23, 24) angeordnet ist, wobei eine (23) der beiden Kupplungen (23, 24) zwischen der Abtriebswelle (10) und der ersten Teilachse (6) und einem drehfest mit der ersten Teilachse (6) wirkverbundenen Element (16) des Differentials (8) angeordnet ist, und wobei die andere (24) der beiden Kupplungen (23, 24) zwischen der Abtriebswelle (10) und der zweiten Teilachse (7) und einem mit der zweiten Teilachse (7) wirkverbundenen Element (18) des Differentials (8) angeordnet ist.

## Claims

1. Drive train (1) of a motor vehicle between a drive unit (2) and a first wheel axle (4) and a second wheel axle (5), wherein the second wheel axle (5) comprises at least a first part-axle (6) and a second part-axle (7), and wherein the first and the second part-axle (6, 7) are connected by means of a first and by means of a second connection shaft (12, 13) so as to divide torque to a differential (8), wherein the differential (8) is a single differential (8) which is operationally connected by means of a drive shaft (9) to the drive unit (2) and which can selectively be operationally connected to the first wheel axle (4) so as to divide torque, and wherein the differential (8) is a planet gear differential having a sun wheel (16), a ring gear (17) and a planet carrier (18) having at least one planet wheel (19, 20) which meshes with the sun wheel (16) and the ring gear (17), **characterised in that** the ring gear (17) is operationally connected to the drive shaft (9), the sun wheel (16) is operationally connected to one of the first and the second connection shaft (12, 13) and the planet carrier (18) is operationally connected to the other of the first and the second connection shaft (12,13), and **in that** a separately switchable clutch (23,24) is arranged between each of the two connection shafts (12,13) and the first wheel axle (4).

2. Drive train according to claim 1, **characterised in that** the differential can be selectively operationally connected via one or both connection shafts (12,13) and an output shaft (10) to the first wheel axle (4) so as to divide torque.

3. Drive train according to claim 1 or 2, **characterised in that** the planet carrier (18) has at least one outer planet wheel (19) and at least one inner planet wheel (20), which mesh with each other, wherein the outer planet wheel (19) meshes with the ring gear (17) and the inner planet wheel (20) meshes with the sun wheel (16).

4. Drive train according to any one of the preceding claims, **characterised in that** one (23) of the two clutches (23, 24) is arranged between the output shaft (10) and one (12) of the first and second connection shaft (12, 13) or an element (18) of the differential (8) which is operationally connected to this connection shaft (12), and **in that** the other (24) of the two clutches (23, 24) is arranged between the output shaft (10) and the other (13) of the first and the second connection shaft (12,13) or an element (16) of the differential (8) which is operationally connected to this connection shaft (12).

5. Drive train according to any one of the preceding claims, **characterised in that** a separately switchable clutch (23, 24) is arranged between each of the two part-axles (6, 7) and the first wheel axle (4).

6. Drive train according to claim 5, **characterised in that** one (23) of the two clutches (23,24) is arranged between the output shaft (10) and the first part-axle (6) and an element (16) of the differential (8) which is operationally connected to the first part-axle (6) in a rotationally secure manner, and **in that** the other (24) of the two clutches (23, 24) is arranged between the output shaft (10) and the second part-axle (7) and an element (18) of the differential (8) which is operationally connected to the second part-axle (7).

7. Drive train according to any one of the preceding claims, **characterised in that** the first and the second connection shaft (12, 13) or the output shaft (10) are cardan shafts.

8. Drive train according to any one of the preceding claims, **characterised by** a first connection shaft (12) which is operationally connected via a bevel gear mechanism (14) to the first part-axle (6) and a second connection shaft (13) which is coaxial with respect to the first connection shaft (12) and which is operationally connected to the second part-axle (7), wherein two axial bearings (34, 35) which operate in opposing directions are arranged between the two coaxial connection shafts (12,13).

9. Drive train according to claim 8, **characterised in that** the two bevel gear mechanisms (14, 15) have crown wheels (32, 33) with differently sized crown wheel diameters.

10. Drive train according to claim 8 or 9, **characterised in that** a crown wheel (33) is supported by one (15) of the two bevel gear mechanisms (14, 15) via two axial bearings (41, 42) on a support shaft (40) which is connected in a rotationally secure manner to a crown wheel (32) of the other (14) of the two bevel gear mechanisms (14, 15).

11. Drive train (1) of a motor vehicle between a drive unit (2) and a first wheel axle (4) and a second wheel axle (5), wherein the second wheel axle (5) comprises at least a first part-axle (6) and a second part-axle (7), and wherein the first and the second part-axle (6, 7) are connected to a differential (8) so as to divide torque, wherein the differential (8) is a single differential which is operationally connected by means of a drive shaft (9) to the drive unit (2) and which can selectively be operationally connected to the first wheel axle (4) so as to divide torque, and wherein the differential (8) is a planet gear differential having a sun wheel (16), a ring gear (17) and a planet carrier (18) having at least one planet wheel (19, 20) which meshes with the sun wheel (16) and the ring gear (17), **characterised in that** the ring gear (17) is operationally connected to the drive shaft (9), the sun wheel (16) is operationally connected to one of the first and the second connection shaft (12, 13) and the planet carrier (18) is operationally connected to the other of the first and the second connection shaft (12, 13), and **in that** a separately switchable clutch (23, 24) is arranged between each of the two connection shafts (12, 13) and the first wheel axle (4), wherein one of the separately switchable clutches (23, 24) is arranged between each of the two part-axles (6, 7) and the first wheel axle (4), wherein one (23) of the two clutches (23, 24) is arranged between the output shaft (10) and the first part-axle (6) and an element (16) of the differential (8) which is operationally connected to the first part-axle (6) in a rotationally secure manner, and wherein the other (24) of the two clutches (23, 24) is arranged between the output shaft (10) and the second part-axle (7) and an element (18) of the differential (8) which is operationally connected to the second part-axle (7).

## Revendications

1. Train d'entraînement (1) d'un véhicule automobile entre un groupe d'entraînement (2) et un premier essieu (4) ainsi qu'un second essieu (5), dans lequel le second essieu (5) est constitué d'au moins un premier essieu partiel (6) et d'un second essieu partiel (7), et dans lequel le premier et le second essieu partiel (6, 7) sont reliés par un premier et un second arbre de liaison (12, 13) en proportionnant le couple de torsion à un différentiel (8), dans lequel le différentiel (8) est un différentiel unique (8) raccordé au groupe d'entraînement via un arbre d'entraînement (9) et qui peut être raccordé au premier essieu (4) en option en proportionnant le couple de torsion et dans lequel le différentiel (8) est un différentiel à pignon(s) satellite(s) avec une roue solaire (16), une couronne de train planétaire (17) et un porte-satellite (18) avec au moins un pignon satellite (19, 20) en prise avec la roue solaire (16) et la couronne de train planétaire (17), **caractérisé en ce que** la couronne de train planétaire (17) est raccordée à l'un du premier et du second arbre de liaison (12, 13) et le porte-satellite (18) avec l'autre du premier et du second arbre de liaison (12, 13) et un couplage séparément commutable (23, 24) est agencé entre chacun des deux arbres de liaison (12, 13) et le premier essieu (4).

2. Train d'entraînement selon la revendication 1, **caractérisé en ce que** le différentiel peut être raccordé au choix via un ou les deux arbres de liaison (12, 13) et un arbre de sortie (10) en proportionnant le couple de torsion avec le premier essieu (4).

3. Train d'entraînement selon la revendication 1 ou 2, **caractérisé en ce que** le porte-satellite (18) présente au moins un pignon satellite externe (19) et au moins un pignon satellite interne (20) qui sont en prise mutuellement, dans lequel le pignon satellite externe (19) est en prise avec la couronne de train planétaire (17) et le pignon satellite interne (20) avec la roue solaire (16).

4. Train d'entraînement selon l'une quelconque des revendications précédentes, **caractérisé en ce qu'**un (23) des deux couplages (23, 24) est agencé entre l'arbre de sortie (10) et l'un (12) du premier et du second arbre de liaison (12, 13) ou un élément (18) du différentiel (8) raccordé à cet arbre de liaison (12) et l'autre (24) des deux couplages (23, 24) est agencé entre l'arbre de sortie (10) et l'autre (13) du premier et du second élément (16) du différentiel (8) raccordé à cet arbre de liaison (12).

5. Train d'entraînement selon l'une quelconque des revendications précédentes, **caractérisé en ce qu'**un couplage commutable séparément (23, 24) est agencé entre chacun des deux essieux partiels (6, 7) et le premier essieu (4).

6. Train d'entraînement selon la revendication 5, **caractérisé en ce qu'**un (23) des deux couplages (23, 24) est agencé entre l'arbre de sortie (10) et le premier essieu partiel (6) et un élément (16) du différentiel (8) raccordé de manière solidaire en rotation avec le premier essieu partiel (6) et l'autre (24) des deux couplages (23, 24) est agencé entre l'arbre de sortie (10) et le second essieu partiel (7) et un élément (18) du différentiel (8) raccordé au second essieu partiel (7).

7. Train d'entraînement selon l'une quelconque des revendications précédentes, **caractérisé en ce que** le premier et le second arbre de liaison (12, 13) ou l'arbre de sortie (10) sont des arbres à cardan.

8. Train d'entraînement selon l'une quelconque des revendications précédentes, **caractérisé par** un premier arbre de liaison (12) raccordé au premier essieu partiel (6) via un engrenage à pignons coniques (14) et un second arbre de liaison (13) raccordé au second essieu partiel (7) et coaxial avec le premier arbre de liaison (12), dans lequel deux paliers lisses axiaux (34, 35) opérant en sens contraire sont agencés entre les deux arbres de liaison coaxiaux (12, 13).

9. Train d'entraînement selon la revendication 8, **caractérisé en ce que** les deux engrenages à pignons coniques (14, 15) présentent des couronnes de différentiel (32, 33) de diamètres de grandeur différente.

10. Train d'entraînement selon la revendication 8 ou 9, **caractérisé en ce qu'**une couronne de différentiel (33) de l'un (15) des deux engrenages à pignons coniques (14, 15) s'appuie via deux paliers lisses coaxiaux (41, 42) sur un arbre d'appui (40) qui est relié solidairement en rotation à une couronne de différentiel (32) de l'autre (14) des deux engrenages à pignons coniques (14, 15).

11. Train d'entrainement (1) d'un véhicule automobile entre un groupe d'entraînement (2) et un premier essieu (4) ainsi qu'un second essieu (5), dans lequel le second essieu (5) est constitué d'au moins un premier essieu partiel (6) et d'un second essieu partiel (7), et dans lequel le premier et le second essieu partiel (6, 7) sont reliés à un différentiel (8) en proportionnant le couple de rotation, dans lequel le différentiel (8) est un différentiel unique (8) raccordé au groupe d'entraînement (2) via un arbre d'entraînement (9) et qui peut être raccordé en option en proportionnant le couple de torsion au premier essieu (4), et dans lequel le différentiel (8) est un différentiel de satellite avec une roue solaire (16), une couronne de train planétaire (17) et un porte-satellite (18) avec au moins un pignon satellite (19, 20) en prise avec la roue solaire (16) et avec la couronne de train planétaire (17), **caractérisé en ce que** la couronne de train planétaire (17) est raccordée à l'arbre d'entraînement (9), la roue solaire (16) avec l'un du premier et du second arbre de liaison (12, 13) et le porte-satellite (18) avec l'autre du premier et du second arbre de liaison (12, 13), et un couplage séparément commutable (23, 24) est agencé entre chacun des deux arbres de liaison (12, 13) et le premier essieu (4), dans lequel l'un des couplages commutable séparément (23, 24) est agencé entre chacun des deux essieux partiels (6, 7) et le premier essieu (4), dans lequel l'un (23) des deux couplages (23, 24) est agencé entre l'arbre de sortie (10) et le premier essieu partiel (6) et un élément (16) du différentiel (8) raccordé solidaire en rotation avec le premier essieu (6), et dans lequel l'autre (24) des deux couplages (23, 24) est agencé entre l'arbre de sortie (10) et le second essieu partiel (7) et un élément (18) du différentiel (8) raccordé au second essieu partiel (7).
